# EUROPÄISCHE PATENTSCHRIFT

(11) **EP 0 462 153 B1**
(45) Veröffentlichungstag und Bekanntmachung des Hinweises auf die Patenterteilung: **03.08.1994**
(21) Anmeldenummer: 90904284.8
(22) Anmeldetag: 21.02.1990
(51) Int. Cl.: C25D 17/28, C23G 3/00, B65G 49/04

(54) **EINRICHTUNG ZUM TRANSPORT VON SCHÜTTFÄHIGEM GUT MIT EINEM SCHWINGFÖRDERER, DER IN EINE FLÜSSIGKEIT EINTAUCHT**
DEVICE FOR TRANSPORTING BULK MATERIALS COMPRISING A VIBRATOR CONVEYOR WHICH DIPS INTO A LIQUID
DISPOSITIF DE TRANSPORT DE MATERIAUX EN VRAC AU MOYEN D'UN CONVOYEUR OSCILLANT IMMERGE DANS UN LIQUIDE

(30) Priorität: 06.03.1989 DE 3907186
(43) Veröffentlichungstag der Anmeldung: 27.12.1991
(73) Patentinhaber: SIEMENS AKTIENGESELLSCHAFT, 80333 München (DE)
(72) Erfinder: BIRKLE, Siegfried, W-8552 Höchstadt/Aisch (DE); ELSEL, Werner, W-8520 Erlangen (DE); GEHRING, Johann, W-8521 Spardorf (DE); NIPPE, Waldemar, W-8520 Erlangen (DE); MAURER, Arnolf, W-8526 Bubenreuth (DE)
(86) Internationale Anmeldenummer: EP9000295
(87) Internationale Veröffentlichungsnummer: WO9010739

(56) Entgegenhaltungen:
- EP-A- 0 209 015

## Beschreibung

Die Erfindung bezieht sich auf eine Einrichtung zum Transport von schüttfähigem Gut, insbesondere zum galvanischen Abscheiden von Aluminium aus aprotischen, sauerstoff- und wasserfreien aluminiumorganischen Elektrolyten mit einem Schwingförderer. Die Förderrinne des Schwingförderers ist wendelförmig um ein Zentralrohr angeordnet und von einem Behälter umgeben. Dieser Behälter enthält eine Flüssigkeit, in die der Schwingförderer mit dem Zentralrohr teilweise eintaucht.

Es ist bekannt, daß durch Oberflächenveredlung von metallischen Bauteilen, deren Lebensdauer verlängert werden kann, neue Anwendungsgebiete erschlossen werden können. Beispielsweise kann eine Beschichtung von Leichtmetall und Eisenwerkstoffen zweckmäßig sein, da es sich bei ihnen im allgemeinen um verhältnismäßig unedle Metalle handelt, deren Oberflächen unter der Einwirkung der Atmosphäre korrodieren können. Durch entsprechende Vorbehandlung erhalten die Bauteile eine blanke deckschichtfreie Oberfläche. Die metallische Beschichtung kann durch eine Nachbehandlung ergänzt werden.

Während der galvanischen Bearbeitung müssen die schüttfähigen Kleinteile so zusammengehalten werden, daß jedes Einzelteil elektrischen Kontakt hat. Andererseits soll das zu behandelnde Schüttgut soweit ausgebreitet werden, daß die Metallabscheidung auf einer möglichst großen Warenoberfläche erfolgen kann und eine möglichst gleichmäßige Stromdichte auf allen Teilen gewährleistet ist. Eine weitere wesentliche Voraussetzung für die Erzielung einwandfreier Metallüberzüge mit einer gleichmäßigen Schichtdicke ist eine ausreichende Durchmischung des Gutes während der galvanischen Bearbeitung. Die Einrichtungen zur elektrolytischen Oberflächenbeschichtung sind mit Fördermitteln für den Transport des Schüttgutes durch den Elektrolyten ausgerüstet, durch die in Verbindung mit entsprechenden Ein- und Ausgangsschleusen eine kontinierliche oder auch intervallmäßige Eindosierung und Entnahme des Gutes ermöglicht wird. Außerdem muß sowohl die Bewegung durch den Elektrolyten sowie die Durchmischung des Gutes als auch der Transport durch den Elektrolyten so vorgenommen werden, daß eine schonende Behandlung des Gutes gewährleistet ist und auch empfindliche Bauteile während der galvanischen Behandlung nicht mechanisch beschädigt werden.

Diese Anforderungen sind aber nicht nur bei der elektrolytischen Oberflächenbeschichtung, insbesondere dem Massengalvanisieren, gegeben, sondern können beispielsweise auch der elektrochemischen Oberflächenbehandlung von schüttfähigem Gut in Flüssigkeiten, wie beispielsweise beim chemischen und elektrolytischen Beizen in Säuren oder Laugen, sowie beim elektrolytischen Entfetten in alkalischen Bädern oder auch beim elektrolytischen Polieren auftreten. Das schüttfähige Gut wird bei der elektrolytischen Oberflächenbehandlung entweder als Kathode oder als Anode geschaltet, wobei die Schaltung als Anode beispielsweise beim elektrolytischen Polieren angewandt wird, während beispielsweise bei der Abscheidung von Aluminium das Schüttgut vorzugsweise als Kathode geschaltet wird.

Zur Massengalvanisierung, insbesondere zum galvanischen Abscheiden von Aluminium, ist eine bekannte Einrichtung geeignet, bei der zum Transport des schüttfähigen Gutes durch das Behandlungsbad ein Schwingförderer mit einer horizontalen und vertikalen Schwingkomponente vorgesehen ist. Dieser Schwingförderer transportiert das schüttfähige Gut unter Ausnutzung der Massenkräfte in einer wendelförmigen Förderrinne in ansteigender Richtung um eine Tragsäule, die mit der Förderrinne verbunden ist. Der Schwingförderer ist mit der Tragsäule in einem gasdichten Behälter untergebracht, der einen Elektrolyten enthält, in den der Schwingförderer teilweise eintaucht. Als Antriebsmittel dienen beispielsweise schrägwirkende Vibratoren oder schräggestellte Lenker. Zusätzlich können Schwerkraftförderer in der Form von Fallrohren vorgesehen sein. Solche Schwingförderer erfordern nur eine verhältnismäßig geringe Antriebskraft und ermöglichen eine schonende Förderung des schüttfähigen Gutes. Man erhält eine intensive Warenbewegung und einen guten Elektrolytaustausch sowie eine gleichmäßige Stromaufnahme über die gesamte effektive Oberfläche des ausgebreiteten Gutes (EP-A 0 209 015).

In einer derartigen Einrichtung muß mit der Schwingbewegung des Zentralrohres und der damit verbundenen Förderrinne ein der Schwingungsamplitude entsprechender Teil der Flüssigkeit, beispielsweise des Elektrolyten, verdrängt werden. Dies wird jedoch schwierig bei großen Anlagen, wenn der Außendurchmesser des Zentralrohres und damit der Innendurchmesser der Förderrinne sowie ihre Breite und die Höhe der Flüssigkeitssäule vorbestimmte Werte überschreiten.

Der Erfindung liegt nun die Aufgabe zugrunde, bei einer Einrichtung zum Transport von schüttfähigem Gut in einer Flüssigkeit mit einem Schwingförderer mit geschlossenem Boden die Schwingbewegung der Förderrinne zu verbessern.

Die Erfindung beruht auf der Erkenntnis, daß man zwar die Motorleistung des Antriebs oder auch die Unwucht des Exzenters und damit die Schwingungsamplitude der Förderrinne erhöhen könnte. Diese Gestaltung erfordert aber zugleich eine mechanisch stabilere Bauweise der Förderrinne und des Zentralrohres sowie des Bodens des Behälters, von dem der Schwingförderer umgeben ist. Außerdem sind dann mechanisch widerstandsfähigere Lager für die Zentrierung des vibrierenden Zentralrohres erforderlich. Daraus ergibt sich wiederum eine entsprechend höhere Masse des Schwingförderers, die zusätzliche Anforderungen beispielsweise an die vibrierenden Federn und an die Bodenbelastung stellt. Die leistungsstärkeren Motoren ergeben einen erhöhten Energieverbrauch und unter Umständen ist auch eine höhere Lärmbelästigung der Umgebung zu erwarten.

Die genannte Aufgabe wird deshalb erfindungsgemäß gelöst mit den - ein Gaspolster beinhaltenden - kennzeichnenden Merkmalen des Anspruchs 1. Mit diesem Gaspolster erhält man ein Schwingfördersystem, das der Beförderung in gasförmigen Medien hinsichtlich der zu erwartenden Druckverhältnisse nahekommt und vom Durchmesser des Zentralrohres praktisch unabhängig wird. Das Gaspolster kann durch die Auf- und Abwärtsbewegungen der schwingenden Systemkomponenten komprimiert und entspannt werden, ohne daß die Flüssigkeitssäule für die Warenförderung nachteilige Drücke aufbauen kann.

Weitere besonders vorteilhafte Ausführungsformen der Einrichtung ergeben sich aus den Unteransprüchen.

Zur weiteren Erläuterung der Erfindung wird auf die Zeichnung Bezug genommen, in der verschiedene Ausführungsformen einer Einrichtung zum Transport von schüttfähigem Gut gemäß der Erfindung schematisch veranschaulicht sind. In Figur 1 ist eine Einrichtung dargestellt, bei der Das Gaspolster unter dem Boden des Zentralrohres angeordnet ist. Figur 2 zeigt einen waagerechten Schnitt dieser Einrichtung. In Figur 3 ist eine Einrichtung dargestellt, bei der das nach unten offene Zentralrohr als Behälter für das Gaspolster vorgesehen ist. In Figur 4 ist eine Ausführungsform veranschaulicht, bei der das Gaspolster unter dem Boden des Zentralrohres angeordnet und teilweise von einem Federbalg umgeben ist.

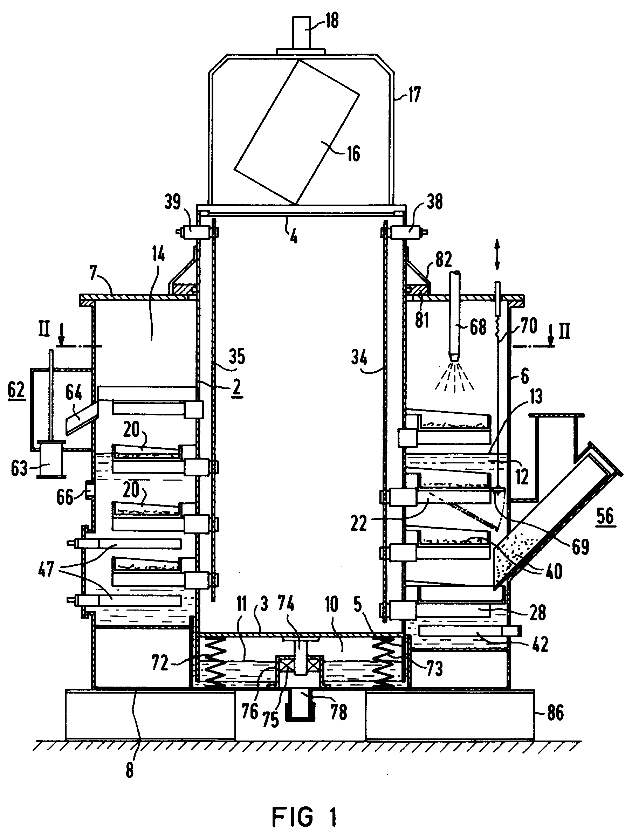

Eine Einrichtung gemäß Figur 1 zum Transport von schüttfähigem Gut, die beispielsweise zum galvanischen Abscheiden von Aluminium aus aprotischen, sauerstoff- und wasserfreien aluminiumorganischen Elektrolyten vorgesehen sein soll, enthält ein Zentralrohr 2 mit einem Boden 3 und einem Deckel 4, das aus einem Behälter 6 herausragt, dessen Deckel 7 mit dem Zentralrohr 2 gasdicht verbunden ist. Zwischen dem Boden 3 des Zentralrohres 2 ist ein Gaspolster 10 eingeschlossen, das von einem hohlzylindrischen Fortsatz 5 am Boden 3 des Zentralrohres 2 seitlich begrenzt ist und das nach Art einer Taucherglocke auf einem unteren Spiegel 11 einer Flüssigkeit 12 ruht, in die das Zentralrohr 2 teilweise eintaucht und deren oberer Spiegel 13 in der Figur gestrichelt angedeutet ist. Die Flüssigkeit 12 kann vorzugsweise ein aprotischer sauerstoff- und wasserfreier aluminiumorganischer Elektrolyt sein, der in dem gasdicht abgeschlossenen System aus dem ruhenden Behälter 6 und dem schwingenden Zentralrohr 2 mit der Förderrinne 20 angeordnet ist.

Oberhalb des Deckels 4 des Zentralrohres 2 und damit außerhalb des Behälters 6 ist ein Antrieb 16 für das Zentralrohr 2 und die damit verbundene Förderrinne 20 vorgesehen, der an einem Lagerbock 17 befestigt ist und von dem noch ein Lagerzapfen 18 in der Figur dargestellt ist. Der Antrieb 16 bewirkt in Verbindung mit einem in der Figur nicht dargestellten Exzenter eine Schwingbewegung des Zentralrohres 2 und damit der Förderrinne 20, die wendelförmig um das Zentralrohr 2 angeordnet ist. Die Förderrinne 20, die beispielsweise aus Kunststoff, insbesondere Hartgewebe, bestehen kann, ist mit Tragholmen 22 und 28 verbunden, die vorzugsweise zugleich als Kathoden dienen und mit Hilfe von nicht näher bezeichneten Durchführungen elektrisch isoliert durch den Behälter 2 hindurchgeführt sind. Die in Achsrichtung übereinander angeordneten Tragholme 22 und 28 sind jeweils über eine gemeinsame elektrische Sammelschiene 34 bzw. 35 mit einem Kathodenanschluß 38 bzw. 39 verbunden. In der Figur sind auch zwei Anoden angedeutet, die am nicht näher bezeichneten Deckel eines Anodenschachts befestigt und deren elektrische Anschlußleiter elektrisch isoliert durch diesen Deckel hindurchgeführt sind und in der Figur mit 47 bezeichnet sind. Eine weitere Anode 42 ist an der Wand des Behälters 6 befestigt.

Ein nur schematisch angedeuteter Einfuhrschacht 56 dient zur Zuführung des Schüttgutes 40, das in der Figur lediglich durch Punkte angedeutet ist und das beispielsweise aus Schrauben oder anderen Kleinteilen bestehen kann, die zur Galvanisierung innerhalb der Anlage vorgesehen sind. Eine Ausfuhrschleuse 62 enthält einen Ausfuhrschacht 63 und eine Rutsche 64. Unterhalb des Spiegels 13 ist eine Zuführung 66 für die Flüssigkeit 12 vorgesehen. Eine Sprüheinrichtung ist in der Figur mit 68 bezeichnet.

Zwischen dem Boden 3 des Zentralrohres 2 und dem Boden 8 des Behälters 6 sind Federn vorgesehen beispielsweise Spiralfedern, von denen in der Figur nur zwei dargestellt und mit 72 und 73 bezeichnet sind. Ein zur Zentrierung dienender Zapfen 74 ist in einem Lager 75, das vorzugsweise ein Axialpendellager sein kann, in Achsrichtung des Zentralrohres 2 beweglich gelagert. Das Lager 75 ist in einem Lagergehäuse 76 untergebracht, das am Boden 8 des Behälters 6 befestigt ist. Der Boden 8 ist mit einer Öffnung 78 versehen, die zur Ableitung des Elektrolyten 12 dient. Das Zentralrohr 2 wird in einer Zentrierung 81 in Achsrichtung beweglich geführt. Zwischen dem Deckel 7 des ruhenden Behälters 6 und dem beweglichen Zentralrohr 2 wird eine gasdichte, flexible Verbindung durch einen Faltenbalg 82 hergestellt.

Das Gaspolster 10 besteht aus einem inerten Gas. In Verbindung mit einem Elektrolyten als Flüssigkeit 12 kann es vorzugsweise aus einem sauerstofffreien Gas, insbesondere Stickstoff N₂, bestehen, dessen Zuführung in der Figur zur Vereinfachung nicht dargestellt ist.

In dieser Ausführungsform ist das Gaspolster 10 zwischen dem Zentralrohr 2 mit seinem Fortsatz 5 und der Flüssigkeit 12 eingeschlossen. Dieses Gaspolster 10 kann durch die Auf- und Abwärtsbewegungen des schwingenden Systems aus Zentralrohr 2 und Förderrinne 20 leicht komprimiert und entspannt werden, ohne daß die Flüssigkeitssäule für die Förderung des Schüttgutes 40 nachteilige Drücke aufbauen kann.

Der oberhalb des Spiegels 13 der Flüssigkeit 12 liegende Gasraum 14 des Behälters 6 wird im allgemeinen mit einem Inertgas, beispielsweise Stickstoff, gefüllt, dessen Zuführung in der Figur zur Vereinfachung nicht dargestellt ist.

Das zu aluminierende Schüttgut 40 wird über den Einfuhrschacht 56 in den unteren Bereich des Behälters 6 eingebracht und das Schüttgut 40 fällt dann auf das nicht näher bezeichnete untere Ende der Förderrinne 20. Auf dieser als Schwingrinne ausgebildeten und wendelförmig nach oben führenden Förderrinne 20 wird das Schüttgut 40 über den Spiegel 13 des Elektrolyten 12 hinaus nach oben transportiert und fällt dann in das trichterförmig ausgebildete obere Ende der aus dem Behälter 6 hinausführenden Rutsche 64.

Durch den Antrieb 16 wird die Förderrinne 20 über das Zentralrohr 2 zu Schwingungen mit einer etwa schraubenförmigen Bewegung angeregt. Aufgrund der schiefen Bewegung und der dabei auftretenden Beschleunigungen und Geschwindigkeiten wird dem auf der wendelförmig nach oben führenden Förderrinne 20 liegenden Schüttgut 40 eine Bewegung aufgezwungen, so daß es unter ständiger Zunahme an Höhe in Förderrichtung transportiert wird. Das Zentralrohr 2 ist über die Federn 72 und 73 schwingungsfähig auf dem Boden 8 gelagert, der vorzugsweise noch auf einem Traggestell gelagert sein kann, das in der Figur mit 86 bezeichnet ist und über die verschließbare Öffnung 78 eine Entleerung des Elektrolyten 12 ermöglicht.

Der nicht näher dargestellte Antrieb 16 kann beispielsweise aus einem Unwuchtantrieb bestehen, dessen Motor zwei an seinen beiden Seiten angeordnete Schwungscheiben mit einstellbarer Exzentrizität antreibt. Die Antriebsachse dieses Motors ist dann um einen vorbestimmten Winkel von beispielsweise 45° zur Horizontalen geneigt, so daß die Unwucht der Schwungscheiben die bereits erwähnten Schwingungen mit beispielsweise etwa 10 bis 20 Hz und einer etwa schraubenförmigen Bewegung erzeugt.

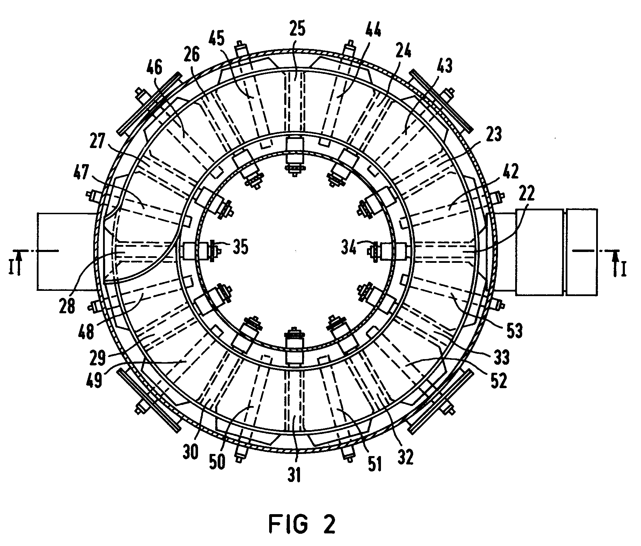

Aus dem Querschnitt der Figur 2 ist die radiale Anordnung der Kathoden 22 bis 33 und der Anoden 42 bis 53 innerhalb des Behälters 6 zu entnehmen. Die der Figur 1 entsprechenden Tragholme sind mit 22 und 28 bezeichnet. Sie sind wie alle anderen mit Hilfe ihrer nicht näher bezeichneten Durchführungen im Zentralrohr 2 befestigt und mit Hilfe der Sammelschienen 34 und 35 mit den in dieser Figur nicht dargestellten Kathodenanschlüssen 38 bzw. 39 verbunden. Die elektrischen Anschlüsse der Anoden 42 bis 53 sind jeweils mit Hilfe einer Durchführung durch einen nicht näher bezeichneten Deckel hindurchgeführt und können somit nach Ablassen des Elektrolyten 12 leicht ausgewechselt werden.

Das Schüttgut 40 wird durch Kontaktschrauben der Tragholme 22 bis 33 kontaktiert, die über Sammelschienen 34 und 35 sowie die Kathodenanschlüsse 38 und 39 mit dem Minuspol einer in der Figur nicht dargestellten Spannungsquelle verbunden sind. Eine unerwünschte Abscheidung an den Einzelteilen der Einrichtung wird dadurch vermieden, daß alle vom Elektrolyten berührten Oberflächen mit einer Isolierung versehen sind, die vorzugsweise aus einer Kunststoffbeschichtung, insbesondere einer Phenolharzbeschichtung, oder auch aus einer Emaillebeschichtung bestehen kann.

Die elektrischen Anschlußleiter der Anoden 42 bis 53 sind durch den Deckel des Anodenschachts oder die Behälterwand elektrisch isoliert hindurchgeführt und mit dem positiven Pol einer in der Figur nicht dargestellten Spannungsquelle verbunden. Die Länge der Anoden 42 bis 53 ist vorzugsweise nicht wesentlich größer als die Breite der Förderrinne 20, so daß sich eine im Verhältnis zur Schüttgutoberfläche große Anodenoberfläche ergibt und für den Durchgang des Galvanisierstromes optimale Bedingungen vorliegen. Der Elektrolytaustausch wird durch die Schwingungen der vorzugsweise perforierten Förderrinne 20 intensiviert.

Die oberhalb des Spiegels 13 der Flüssigkeit 12 im Deckel 7 des Behälters 6 vorgesehene Sprüheinrichtung 68 kann im Bereich des obersten Ganges der Förderrinne 20 ein mit dem Elektrolyten 12 verträgliches Lösungsmittel auf das fertig aluminierte Schüttgut 40 aufsprühen und damit das Schüttgut 40 von noch anhaftenden Elektrolytresten befreien. Bei diesem Lösungsmittel handelt es sich im allgemeinen um das im Elektrolyten enthaltene Toluol To, das an einer beispielsweise oberhalb des Spiegels 13 angeordneten und in der Figur nicht näher dargestellten Kondensationseinrichtung kondensiert und der Sprüheinrichtung 68 wieder zugeführt werden kann.

Falls ein mehrfacher Umlauf des Schüttgutes 40 im Elektrolyten 12 vorgesehen ist, kann die Förderrinne 20 mit einer Klappe 69 versehen sein, die mit einer Klappensteuerung 70 von außen steuerbar ist.

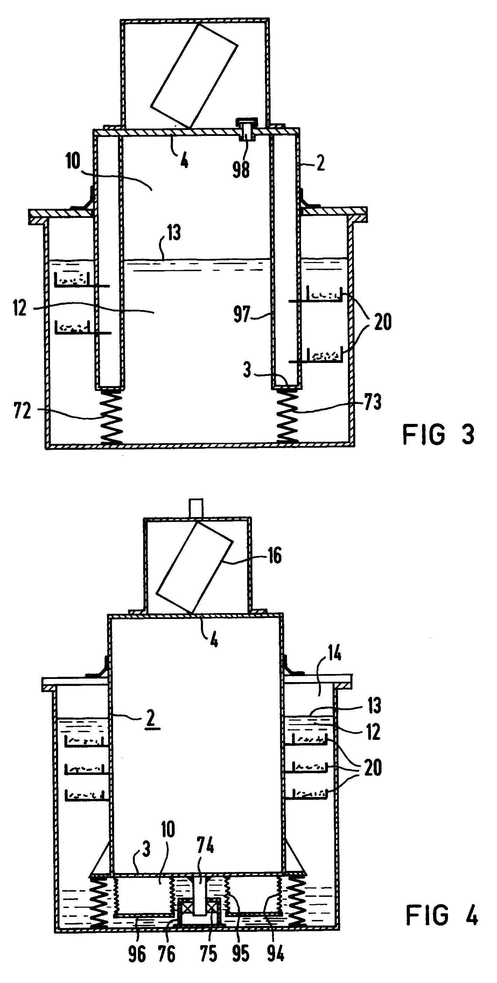

In der Ausführungsform der Einrichtung gemäß Figur 3, in der lediglich das Prinzip der abweichenden Bauweise schematisch veranschaulicht ist, wird ein vorzugsweise doppelwandiges unter offenes Zentralrohr 2 verwendet, dessen ringscheibenförmiger Boden 3 die nicht näher bezeichnete Außenwand des Zentralrohres 2 mit einer Innenwand 97 verbindet. Auf dem Umfang des Bodens 8 sind Federn, beispielsweise vier Federn, verteilt, von denen in der Figur nur zwei sichtbar und entsprechend Figur 1 mit 72 und 73 bezeichnet sind.

In dieser Ausführungsform ist das Gaspolster 10 nach Art einer Taucherglocke oberhalb des Spiegels 13 des Elektrolyten 12 zwischen der Innenwand 97 und dem Deckel 4 des Zentralrohres 2 eingeschlossen. Im Deckel 4 ist ein Gaseinlaß 98 zur Zuführung einer Gasfüllung, beispielsweise Stickstoff, für das Gaspolster 10 angedeutet. Die Förderrinne 20 ist wie in der Ausführungsform gemäß Figur 1 wendelförmig um das Zentralrohr 2 angeordnet.

In der Ausführungsform der Einrichtung zum Transport von schüttfähigem Gut gemäß Figur 4 ist ein ringförmiges Gaspolster 10 unter dem Zentralrohr 2 angeordnet. Dieses Gaspolster 10 ist durch den Boden 3 und durch eine ringscheibenförmige Platte 96 eingeschlossen. Über dem Deckel 4 befindet sich der Antrieb 16. Das Zentralrohr 2 taucht mit der Förderrinne 20 in den Elektrolyten 12 ein, über dessen Spiegel 13 sich der Gasraum 14 befindet.

In dieser Ausführungsform wird das Gaspolster 10 durch den Boden 3 des Zentralrohres 2 und durch zwei konzentrisch angeordnete ringzylindrische Faltenbälge 94 und 95 sowie die ringscheibenförmige Platte 96 begrenzt. In der Öffnung ist der als Zentrierlager dienende, in Achsrichtung bewegliche Zapfen 74 mit dem Lager 75 und der Buchse 76 entsprechend der Ausführungsform nach Figur 1 angeordnet.

In den Ausführungsbeispielen ist jeweils eine Einrichtung zum Galvanisieren von schüttfähigem Gut vorgesehen, das zu diesem Zweck in einem Elektrolyten transportiert wird. Die Einrichtung kann jedoch auch zum Transport von schüttfähigem Gut vorgesehen sein, das beispielsweise zum Zwecke einer Vorbehandlung, beispielsweise zum Reinigen oder Beizen sowie zum Entfetten, die Einrichtung durchläuft. Die Einrichtung enthält dann anstelle des Elektrolyten ein flüssiges Behandlungsmedium, beispielsweise ein Reinigungsmittel oder ein Fettlösungsmittel. Ferner kann die Einrichtung zur Nachbehandlung eines Schüttgutes, beispielsweise zum Entwässern, verwendet werden.

## Patentansprüche

1. Einrichtung zum Transport von schüttfähigem Gut mit einem Schwingförderer, dessen wendelförmige Förderrinne mit einem Zentralrohr eine schwingfähige Baueinheit bildet und in einem gasdichten Behälter angeordnet ist, der eine Flüssigkeit enthält, in die der Schwingförderer wenigstens teilweise eintaucht, **dadurch gekennzeichnet,** daß zwischen der Baueinheit und der Flüssigkeit (12) ein Gaspolster (10) derart angeordnet ist, daß es durch die Auf- und Abwärtsbewegung des schwingenden Systems aus Zentralrohr (2) und Förderrinne (20) komprimiert und entspannt wird.

2. Einrichtung nach Anspruch 1, **dadurch gekennzeichnet,** daß die Flüssigkeit in einem gasdichten Behälter (6) angeordnet ist.

3. Einrichtung nach Anspruch 2, **dadurch gekennzeichnet,** daß das untere Ende des Zentralrohres (2) mit einem Boden (3) abgeschlossen und mit einem hohlzylindrischen Rohransatz (5) versehen ist, die gemeinsam nach Art einer Taucherglocke mit der Flüssigkeit (12) das Gaspolster (10) einschließen.

4. Einrichtung nach einem der Ansprüche 1 bis 3, **gekennzeichnet** durch eine federnde Lagerung des Zentralrohres (2).

5. Einrichtung nach Anspruch 1, **dadurch gekennzeichnet,** daß das obere Ende des Zentralrohres (2) mit einem Deckel (4) abgeschlossen ist, der gemeinsam mit dem Mantel des Zentralrohres (2) und der Flüssigkeit (12) nach Art einer Taucherglocke das Gaspolster (10) abschließt.

6. Einrichtung nach Anspruch 5, **gekennzeichnet** durch ein doppelwandiges Zentralrohr (2) mit einem ringscheibenförmigen Boden (3) und durch Federn (72, 73), die zwischen dem Boden (3) des Zentralrohres (2) und dem Boden (8) des Behälters angeordnet sind.

7. Einrichtung nach Anspruch 1, **dadurch gekennzeichnet,** daß das Gaspolster (10) in einem ringförmigen Gasraum angeordnet ist, der oben vom Boden (3) des Zentralrohres (2) und unten durch eine Ringplatte (96) und seitlich außen von dem ringzylindrischen Faltenbalg (94) und innen von einem ringzylindrischen Faltenbalg (95) eingeschlossen ist.

8. Einrichtung nach Anspruch 7, **dadurch gekennzeichnet,** daß der innere ringzylindrische Faltenbalg (95) wenigstens teilweise ein Zentrierlager für das Zentralrohr (2) umgibt.

9. Einrichtung nach Anspruch 1, **dadurch gekennzeichnet,** daß ein Antrieb (16) für die Schwingbewegung der Förderrinne (20) vorgesehen ist, der oberhalb des Zentralrohres (2) außerhalb des Behälters (6) angeordnet ist.

10. Einrichtung nach Anspruch 9, **dadurch gekennzeichnet,** daß das Zentralrohr (2) mit einem Lagerbock (17) für den Antrieb (16) versehen ist.

## Claims

1. A device for transporting bulk material, comprising a vibrator conveyor whose spiral conveying trough together with a central pipe forms an assembly, which is able to oscillate and is arranged in a gasproof vessel containing a liquid, into which the vibrator conveyor dips at least partially, characterised in that a gas cushion (10) is arranged between the assembly and the liquid (12) in such a manner that the gas cushion is compressed and expanded in response to up and down oscillations of the assembly formed by the central pipe (2) and the conveying trough (20).

2. A device according to claim 1, characterised in that the liquid is disposed in a gasproof vessel (6).

3. A device according to claim 2, characterised in that the lower end of the central pipe (2) is sealed by a bottom (3) and is provided with a hollow-cylindrical pipe extension (5), which together with the liquid (12) enclose the gas cushion (10) in the manner of a diving bell.

4. A device according to one of claims 1 to 3, characterised by a resilient seating of the central pipe (2).

5. A device according to claim 1, characterised in that the upper end of the central pipe (2) is sealed by a cover (4), which together with the casing of the central pipe (2) and the liquid (12) closes off the gas cushion (10) in the manner of a diving bell.

6. A device according to claim 5, characterised by a double-walled central pipe (2) with an annular disk-type bottom (3) and by springs (72, 73) which are arranged between the bottom (3) of the central pipe (2) and the bottom (8) of the vessel.

7. A device according to claim 1, characterised in that the gas cushion (10) is arranged in an annular gas chamber, which is enclosed by the bottom (3) of the central pipe (2) from above, an annular plate (96) from below, an outer annular-cylindrical bellows (94), laterally outside, and an inner annular-cylindrical bellows (95), laterally inside.

8. A device according to claim 7, characterised in that the inner annular-cylindrical bellows (95) at least partially surrounds a centring bearing for the central pipe (2).

9. A device according to claim 1, characterised in that a driving means (16) is provided for the swinging motion of the conveying trough (20), the driving means being disposed above the central pipe (2) and outside the vessel (6).

10. A device according to claim 9, characterised in that the central pipe (2) is provided with a bearing block (17) for the driving means (16).

## Revendications

1. Dispositif pour transporter des matériaux en vrac, comportant un convoyeur oscillant, dont la goulotte transporteuse en forme de spirale constitue, avec un tube central, une unité capable d'oscillations et est disposée dans un récipient étanche au gaz qui contient du liquide dans lequel le convoyeur oscillant est immergé au moins en partie, caractérisé en ce qu'entre l'unité et le liquide (12) est disposé un matelas de gaz (10) de telle sorte qu'il soit comprimé et détendu par le mouvement de montée et de descente du système oscillant formé par le tube central (2) et la goulotte transporteuse (20).

2. Dispositif selon la revendication 1, caractérisé en ce que le liquide est disposé dans un récipient (6) étanche au gaz.

3. Dispositif selon la revendication 2, caractérisé en ce que l'extrémité inférieure du tube central (2) est obturée par un fond (3) et est pourvue d'un appendice tubulaire (5) cylindrique creux qui, en coopération avec le liquide (12) enferme le matelas de gaz (10) à la façon d'une cloche de plongée.

4. Dispositif selon l'une quelconque des revendications 1 à 3, caractérisé par un appui élastique du tube central (2).

5. Dispositif selon la revendication 1, caractérisé en ce que l'extrémité supérieure du tube central (2) est fermée par un couvercle (4) qui, en coopération avec la virole du tube central (2) et le liquide (12), enferme le matelas de gaz (10) à la façon d'une cloche de plongée.

6. Dispositif selon la revendication 5, caractérisé par un tube central (2) à double paroi pourvu d'un fond (3) en forme de disque annulaire ainsi que par des ressorts (72, 73) qui sont disposés entre le fond (3) du tube central (2) et le fond (8) du récipient.

7. Dispositif selon la revendication 1, caractérisé en ce que le matelas de gaz (10) est disposé dans une chambre à gaz de forme annulaire, qui est fermé en haut par le fond (3) du tube central (2), en bas par une plaque annulaire (96), et latéralement à l'extérieur par le soufflet plissé (94) de forme cylindrique annulaire et à l'intérieur par un soufflet plissé (95) de forme cylindrique annulaire.

8. Dispositif selon la revendication 7, caractérisé en ce que le soufflet plissé intérieur (95) de forme cylindrique annulaire entoure au moins partiellement un appui de centrage pour le tube central (2).

9. Dispositif selon la revendication 1, caractérisé en ce qu'il est prévu, pour le mouvement oscillant de la goulotte transporteuse (20), un entraînement (16) qui est disposé au-dessus du tube central (2) et à l'extérieur du récipient (6).

10. Dispositif selon la revendication 9, caractérisé en ce que le tube central (2) est pourvu d'un support de palier (17) pour l'entraînement (16).
